# EUROPEAN PATENT APPLICATION

(11) **EP 4 494 734 A1**
(43) Date of publication of application: **22.01.2025**
(21) Application number: 23795879.8
(22) Date of filing: 21.02.2023
(51) Int. Cl.: B01D 39/16, B01D 39/00, B01D 39/14, B01D 46/02, B01D 53/86

(54) **METHOD FOR PRODUCING FILTER**

(30) Priority: 25.04.2022 JP 2022071280
(71) Applicant: Mitsubishi Heavy Industries, Ltd., Tokyo 100-8332 (JP)
(72) Inventor: KATSUKI, Masatoshi, Tokyo 100-8332 (JP); SUZUKI, Takumi, Tokyo 100-8332 (JP); KAKITANI, Kenta, Tokyo 100-8332 (JP); ASAI, Yuki, Tokyo 100-8332 (JP); AKIYAMA, Hiromichi, Tokyo 100-8332 (JP); NISHIGUCHI, Kiichi, Tokyo 100-8332 (JP)
(74) Representative: Studio Torta S.p.A.
(86) International application number: PCT/JP2023/006157
(87) International publication number: WO 2023/210131

(57) **Abstract**

A method for producing a filter is a method for producing a filter in which a catalyst is supported on a filter cloth. The method includes: a step for preparing a catalyst slurry; a step for adjusting a contact angle of the catalyst slurry with respect to the filter cloth by adding a surfactant to the catalyst slurry; and a step for applying, to the filter cloth, a catalyst slurry having the contact angle adjusted.

## Description

The present disclosure relates to a method for producing a filter.

The present application claims priority based on Japanese Patent Application No. 2022-071280, filed April 25, 2022, the content of which is incorporated herein by reference.

### Background Art

Patent Document 1 discloses a method for producing a filter including deriving the relationship between concentration of an organic solvent contained in a catalyst slurry and a supported amount of a catalyst supported on a filter cloth, and determining the concentration of the organic solvent from the target supported amount of a catalyst to be supported on the filter cloth.

### Citation List

### Patent Document

Patent Document 1: JP 2021-133317A

### Summary of Invention

### Technical Problem

The method for producing a filter disclosed in Patent Document 1 has the catalyst slurry repelled by the filter cloth and cannot cause the catalyst slurry to sufficiently permeate the filter cloth when the filter cloth has water repellency such as one containing a fluorine fiber.

Thus, even applying the catalyst slurry to the filter cloth does not allow the catalyst to be supported in a state of being dispersed on the filter cloth.

In view of the above circumstances, an object of at least one embodiment of the present invention is to provide a method for producing a filter in which a catalyst can be supported in a state of being dispersed on the filter cloth.

### Solution to Problem

A method for producing a filter according to at least one embodiment of the present invention is
a method for producing a filter in which a catalyst is supported on a filter cloth. The method includes:
a step of preparing a catalyst slurry;
a step of adjusting a contact angle of the catalyst slurry with respect to the filter cloth by adding a surfactant to the catalyst slurry; and
a step of applying, to the filter cloth, a catalyst slurry having the contact angle adjusted.

### Advantageous Effects of Invention

According to at least one embodiment of the present invention, the wettability of a catalyst slurry with respect to a filter cloth is improved by adjusting the catalyst slurry such that the contact angle of the catalyst slurry with respect to the filter cloth is small.

Therefore, when the catalyst slurry before the adjustment of the contact angle and the catalyst slurry after the adjustment are compared at the same volume, the catalyst slurry after the adjustment has a larger contact area with the filter cloth fiber.

Due to this, in the catalyst slurry after adjusted to have a small contact angle, the catalyst slurry comes into uniform contact with the filter cloth fiber, the catalyst slurry permeates inside the filter cloth, and the catalyst is supported in a state of being dispersed in the filter cloth fiber.

### Brief Description of Drawings

FIG. 1 is a conceptual diagram illustrating a contact angle of a catalyst slurry with respect to a filter cloth.
FIG. 2 is a flowchart schematically showing a method for producing a filter according to a first embodiment.
FIG. 3 is a flowchart schematically showing an example of a step of applying the catalyst slurry shown in FIG. 2 to a filter cloth.
FIG. 4 is a flowchart schematically showing a step of adjusting a contact angle of a catalyst slurry according to a second embodiment.
FIG. 5 is a graph showing a relationship between a concentration of a surfactant and a contact angle of a catalyst slurry.
FIG. 6 is a flowchart schematically showing a step of acquiring a relationship between a contact angle of a catalyst slurry and a supported amount of a catalyst supported on a filter cloth.
FIG. 7 is a graph showing the relationship between the contact angle of the catalyst slurry and a supported amount of a catalyst supported on a filter cloth.
FIG. 8 is an enlarged view of a filter produced by a method for producing a filter according to a comparative example, the filter in which an ethanol-added catalyst slurry is sprayed onto a filter cloth.
FIG. 9 is an enlarged view of a filter produced by a method for producing a filter according to an example, the filter in which a surfactant-added catalyst slurry is sprayed onto a filter cloth.
FIG. 10 is a graph showing a catalyst permeation depth (relative catalyst permeation depth) of a surfactant-added catalyst slurry with respect to a catalyst permeation depth of an ethanol-added catalyst slurry.
FIG. 11 is a flowchart schematically showing a step of adjusting a contact angle of a catalyst slurry according to a third embodiment.
FIG. 12 is a flowchart schematically showing a step of acquiring a relationship between a contact angle of a catalyst slurry and a falling-off rate of a catalyst supported on a filter cloth.
FIG. 13 is a graph showing a relationship between a contact angle of a catalyst slurry and a falling-off rate of a catalyst supported on a filter cloth.
FIG. 14 is a view schematically illustrating a plant in which an in-furnace DeNOx equipment with a filter applied is installed.
FIG. 15 is a view schematically illustrating a plant in which an in-furnace DeNOx equipment and an exhaust gas recirculation device with a filter applied are installed.

### Description of Embodiments

Embodiments of the present invention will be described in detail below with reference to the accompanying drawings.

However, the dimensions, materials, shapes, relative arrangements, or the like of the components described as embodiments or illustrated in the drawings are not intended to limit the scope of the present invention, but are merely illustrative examples.

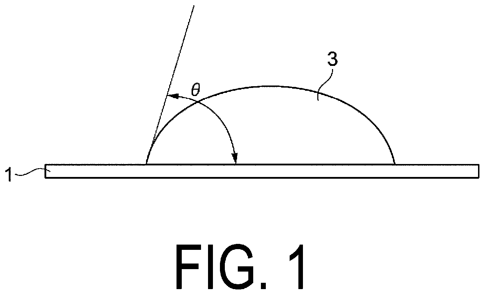

FIG. 1 is a conceptual diagram illustrating a contact angle θ of a catalyst slurry (droplet) 3 with respect to a filter cloth 1.

The contact angle θ of the catalyst slurry (droplet) 3 with respect to the filter cloth 1 illustrated in FIG. 1 is an index for evaluating the wettability of the catalyst slurry 3 with respect to the filter cloth 1.

Since a filter cloth containing a fluorine fiber such as polytetrafluoroethylene (hereinafter, called "PTFE") is water-repellent, even when a water-based catalyst slurry is applied, the catalyst slurry does not permeate the filter cloth, the catalyst aggregates on a surface of the filter cloth, and a uniform and sufficient amount of the catalyst cannot be supported.

The inventors of the present application have found that the contact angle θ of the catalyst slurry 3 with respect to the filter cloth 1 can be controlled by adding a surfactant to the catalyst slurry.

The inventors of the present application have found that, by controlling the contact angle θ of the catalyst slurry 3 with respect to the filter cloth 1 to become small, even a filter cloth containing a fluorine fiber such as PTFE can be permeated with the catalyst slurry, and a uniform and sufficient amount of catalyst can be supported.

From these findings, a method for producing a filter described below is achieved.

### [First Embodiment]

### [Method for Producing Filter]

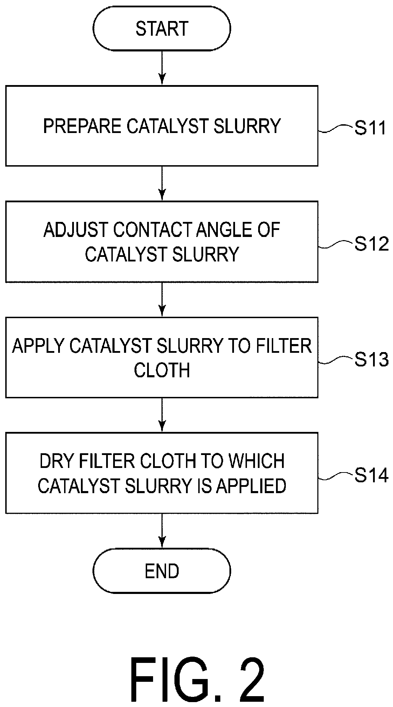

FIG. 2 is a flowchart schematically showing a method for producing a filter according to the first embodiment.

The method for producing a filter according to the first embodiment is a method for producing a filter in which a catalyst is supported on a filter cloth, and the filter cloth includes, but is not limited to, a fluorine fiber such as PTFE, for example.

Examples of the catalyst include, but are not limited to, one containing titanium (Ti) as a component.

As shown in FIG. 2, the method for producing a filter according to the first embodiment includes step (S11) of preparing a catalyst slurry, step (S12) of adjusting a contact angle of the catalyst slurry with respect to the filter cloth by adding a surfactant to the catalyst slurry, step (S13) of applying the filter cloth with a catalyst slurry having the contact angle adjusted, and step (S 14) of drying the filter cloth to which the catalyst slurry is applied.

The surfactant added to the catalyst slurry in step (S 12) of adjusting the contact angle of the catalyst slurry is, but not limited to, an ether type surfactant, for example.

Examples of the ether type surfactant include, but are not limited to, polyoxyethylene alkyl ether or polyalkylene alkyl ether.

In step (S13) of applying the catalyst slurry to the filter cloth, the catalyst slurry is sprayed onto the filter cloth by a spray nozzle (not illustrated).

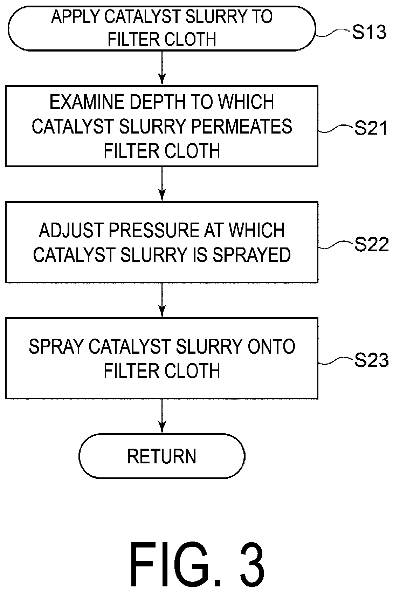

As shown in FIG. 3, step (S13) of applying the catalyst slurry to the filter cloth includes, for example, step (S21) of examining the depth to which the catalyst slurry permeates the filter cloth, step (S22) of adjusting the pressure at which the catalyst slurry is sprayed, and step (S23) of spray-applying (spraying) the catalyst slurry to the filter cloth.

The contact angle θ of the catalyst slurry with respect to the filter cloth can be represented by a function f of a concentration k of the surfactant contained in the catalyst slurry (θ = f(k)).

When the permeation speed of the catalyst slurry is v, the permeation depth of the catalyst slurry is z, the pressure at which the catalyst slurry is sprayed is P, and the time for spraying the catalyst slurry is t, the permeation speed v of the catalyst slurry is obtained by differentiating the permeation depth z of the catalyst slurry with respect to the time for spraying the catalyst slurry (v = dz/dt), and can be represented by a function g of the contact angle θ of the catalyst slurry with respect to the filter cloth, the permeation depth z of the catalyst slurry, and the pressure P for spraying the catalyst slurry (v = g(θ, z, P)).

Due to these, in step (S21) of examining the depth to which the catalyst slurry permeates the filter cloth, the depth to which the catalyst slurry permeates the filter cloth is examined, and in step (S22) of adjusting the pressure at which the catalyst slurry is sprayed, the pressure at which the catalyst slurry is sprayed is adjusted.

### [Effects]

According to the method for producing a filter according to the first embodiment described above, the wettability of the catalyst slurry with respect to the filter cloth is improved by adjusting the contact angle of the catalyst slurry with respect to the filter cloth to be small.

Therefore, when the catalyst slurry before the adjustment of the contact angle and the catalyst slurry after the adjustment are compared at the same volume, the catalyst slurry after the adjustment has a larger contact area with the filter cloth fiber.

Due to this, in the catalyst slurry after adjusted to have a small contact angle, the catalyst slurry comes into uniform contact with the filter cloth fiber, the catalyst slurry permeates inside the filter cloth, and the catalyst is supported in a state of being dispersed in the filter cloth fiber.

For example, the filter cloth is water-repellent because it contains a fluorine fiber, but by adding a surfactant to the catalyst slurry and adjusting the contact angle of the catalyst slurry with respect to the filter cloth to be small, the catalyst slurry can be easily permeated to the filter cloth containing a fluorine fiber.

By permeating the catalyst into the filter cloth containing a fluorine fiber, the catalyst can be supported in a state of being dispersed in the filter cloth fiber even in the filter cloth containing a fluorine fiber.

### [Second Embodiment]

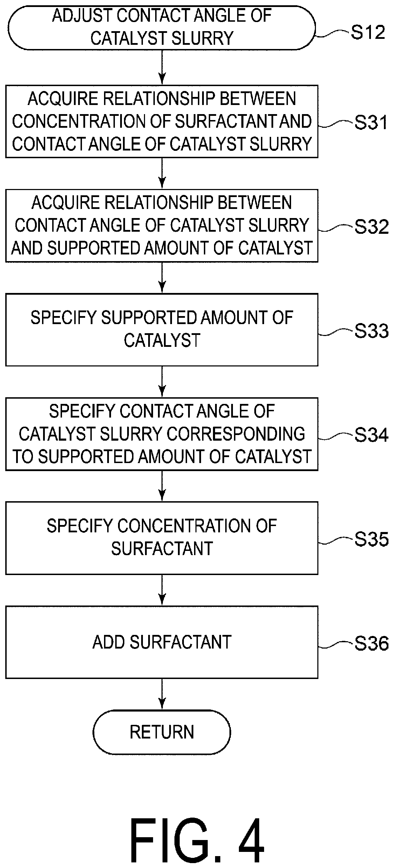

FIG. 4 is a flowchart schematically showing step (S12) of adjusting the contact angle of the catalyst slurry according to the second embodiment.

The method for producing a filter according to the second embodiment specifies step (S12) of adjusting the contact angle of the catalyst slurry with respect to the first embodiment, and step (S11) of preparing the catalyst slurry, step (S13) of applying the filter cloth with a catalyst slurry having the contact angle adjusted, and step (S 14) of drying the filter cloth to which the catalyst slurry is applied are the same as those in the method for producing a filter according to the first embodiment.

Step (S12) of adjusting the contact angle of the catalyst slurry according to the second embodiment includes step (S31) of acquiring the relationship between the concentration of the surfactant and the contact angle of the catalyst slurry, step (S32) of acquiring the relationship between the contact angle of the catalyst slurry and a supported amount of the catalyst, step (S33) of specifying the supported amount of the catalyst, step (S34) of specifying the contact angle of the catalyst slurry corresponding to the supported amount of the catalyst, step (S35) of specifying the concentration of the surfactant, and step (S36) of adding the surfactant.

Step (S31) of acquiring the relationship between the concentration of the surfactant and the catalyst slurry contact angle is a step of acquiring the relationship between the concentration of the surfactant contained in the catalyst slurry and the contact angle of the catalyst slurry with respect to the filter cloth.

The catalyst contained in the catalyst slurry contains titanium (Ti) as a component, the solvent is water, and the slurry concentration of the catalyst slurry is 25 wt.%.

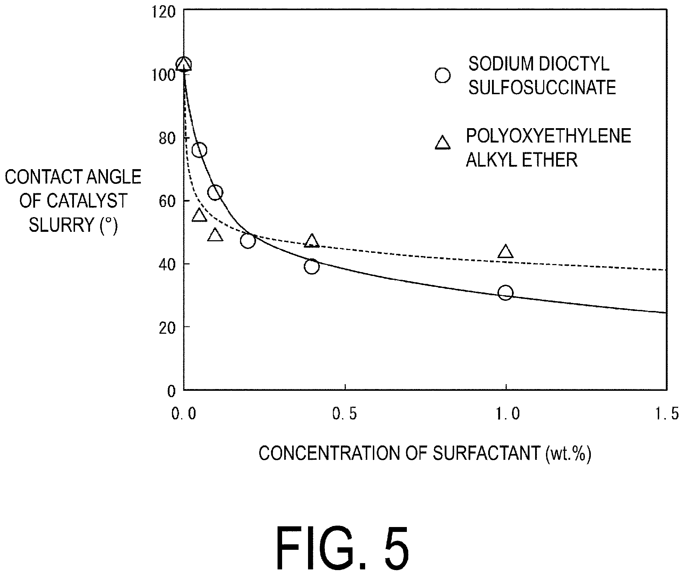

As shown in FIG. 5, the relationship between the concentration of the surfactant contained in the catalyst slurry and the contact angle of the catalyst slurry with respect to the filter cloth is obtained by measuring the contact angle of the catalyst slurry with respect to the filter cloth while changing the concentration of the surfactant contained in the catalyst slurry.

In the example shown in FIG. 5, the relationship between the concentration of the surfactant contained in the catalyst slurry and the contact angle of the catalyst slurry (droplet) with respect to the filter cloth is obtained for sodium dioctyl sulfosuccinate, which is an anionic surfactant, and polyoxyethylene alkyl ether, which is an ether type surfactant.

It can be seen that the polyoxyethylene alkyl ether has a larger contact angle reduction effect in a low concentration range than sodium dioctyl sulfosuccinate.

Therefore, the surfactant to be added to the catalyst slurry is preferably polyoxyethylene alkyl ether rather than sodium dioctyl sulfosuccinate.

Step (S32) of acquiring the relationship between the contact angle of the catalyst slurry and a supported amount of the catalyst is a step of acquiring the relationship between the contact angle of the catalyst slurry (droplet) with respect to the filter cloth and the supported amount of a catalyst supported on the filter cloth.

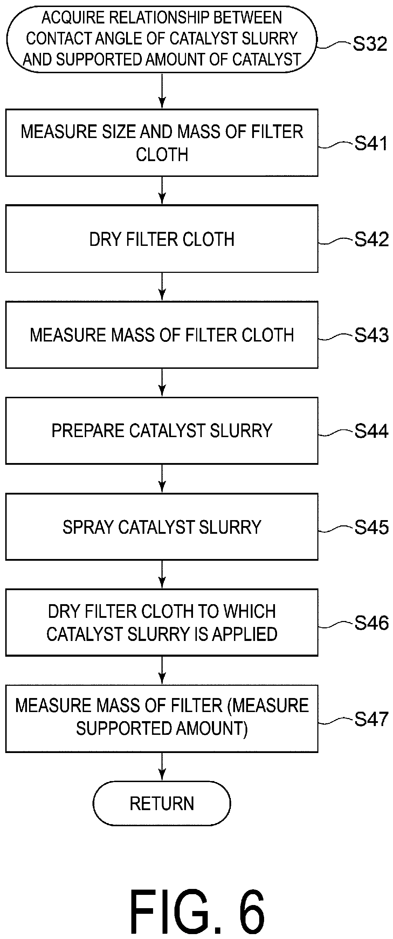

As shown in FIG. 6, step (S32) of acquiring the relationship between the contact angle of the catalyst slurry and a supported amount of the catalyst includes step (S41) of measuring the size and mass of the filter cloth, step (S42) of drying the filter cloth, step (S43) of measuring the mass of the filter cloth, step (S44) of preparing the catalyst slurry, step (S45) of spraying the catalyst slurry, step (S46) of drying the filter cloth to which the catalyst slurry is applied, and step (S47) of measuring the mass of the filter (step of measuring the supported amount).

In step (S42) of drying the filter cloth, the mass of the filter cloth in a dry state can be measured by drying the filter cloth at 110 °C for one hour, for example.

In step (S44) of preparing the catalyst slurry, a catalyst slurry having a different contact angle is prepared by changing the amount of the surfactant added to the catalyst slurry.

In step (S45) of applying the catalyst slurry, for example, the nozzle is a one-fluid nozzle, the ejection amount of the catalyst slurry is 1 L/min, the nozzle pattern is elliptical, the spray pressure is 0.08 (0.05 to 0.15) MPa, the spray distance is 40 cm, and the concentration of the catalyst slurry is 25 wt.%.

In step (S46) of drying the filter cloth to which the catalyst slurry is applied, the filter cloth is dried at 110 °C for 2 hours, for example.

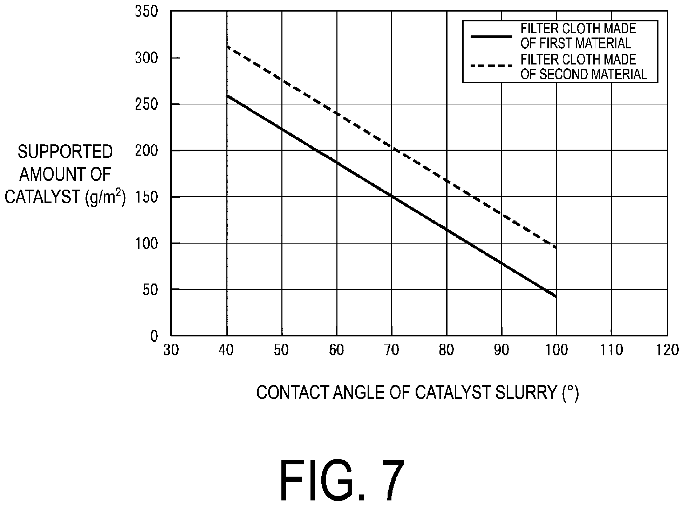

FIG. 7 is a graph showing the relationship between the contact angle of the catalyst slurry and the catalyst supported amount acquired by the step (steps S41 to S47) of acquiring the relationship between the contact angle of the catalyst slurry and the supported amount of the catalyst.

The first material shown in FIG. 7 has the highest water repellency among the currently available fluorine-based fibers, and the second material has the lowest water repellency.

As shown in FIG. 7, the relationship between the contact angle of the catalyst slurry and the catalyst supported amount can be represented by a straight line, and is in a substantially linear relationship, and therefore it is considered that the contact angle of the currently available fluorine fiber and the catalyst supported amount are in a range sandwiched between the two straight lines.

Step (S33) of specifying the supported amount of the catalyst shown in FIG. 4 is a step of specifying the supported amount of a catalyst supported on the filter cloth, and is defined based on the required performance of the filter, for example.

The required performance of the filter includes, for example, differential pressure, necessity of DeNOx performance, and necessity of dioxin decomposition performance.

Step (S34) of specifying the contact angle of the catalyst slurry corresponding to the supported amount of the catalyst is a step of specifying, based on the relationship with the supported amount of the catalyst, the contact angle of the catalyst slurry corresponding to the supported amount of the catalyst specified.

For example, when the filter cloth is a filter cloth of the first material and the supported amount of the catalyst specified is 200g/m², the contact angle is specified as 56° from the relationship between the contact angle of the catalyst slurry and the supported amount of the catalyst shown in FIG. 7.

When the material of the filter cloth and the supported amount of the catalyst are specified in this manner, the contact angle of the catalyst slurry is specified.

Step (S35) of specifying the concentration of the surfactant shown in FIG. 4 is a step of acquiring, based on the relationship with the contact angle of the catalyst slurry, the concentration of the surfactant corresponding to the contact angle of the catalyst slurry specified.

For example, when the surfactant is polyoxyethylene alkyl ether and the contact angle of the catalyst slurry specified is 56°, the concentration of the surfactant is specified as 0.1 wt.% from the relationship between the concentration of the surfactant and the contact angle of the catalyst slurry shown in FIG. 5.

When the contact angle between the surfactant and the catalyst slurry is specified in this manner, the concentration of the surfactant is specified.

Step (S36) of adding the surfactant shown in FIG. 4 is a step of adding the surfactant to the catalyst slurry to have a specified concentration.

In step S36, the surfactant is added to the catalyst slurry prepared in step S11 to have the concentration of the surfactant specified in step 35.

For example, when the surfactant is polyoxyethylene alkyl ether and the concentration of the surfactant is 0.1 wt.%, polyoxyethylene alkyl ether is added to the catalyst slurry prepared in step S11 so that the concentration of polyoxyethylene alkyl ether becomes 0.1 wt.%.

### [Confirmation of Effects]

In the confirmation of the effects described below, the catalyst concentration of the catalyst slurry of the example is 25 wt.%, and the additive concentration of the surfactant added to the catalyst slurry is 1.0 wt.%, but the contact angle of the catalyst slurry with respect to the filter cloth is still adjusted by adding the surfactant to the catalyst slurry.

Therefore, the concentration of the surfactant added to the catalyst slurry is not limited to 1.0 wt.%, and for example, when the surfactant is polyoxyethylene alkyl ether, the concentration may exceed 1.0 wt.% as long as the concentration is 0.1 wt.% or more.

### [Comparative Example]

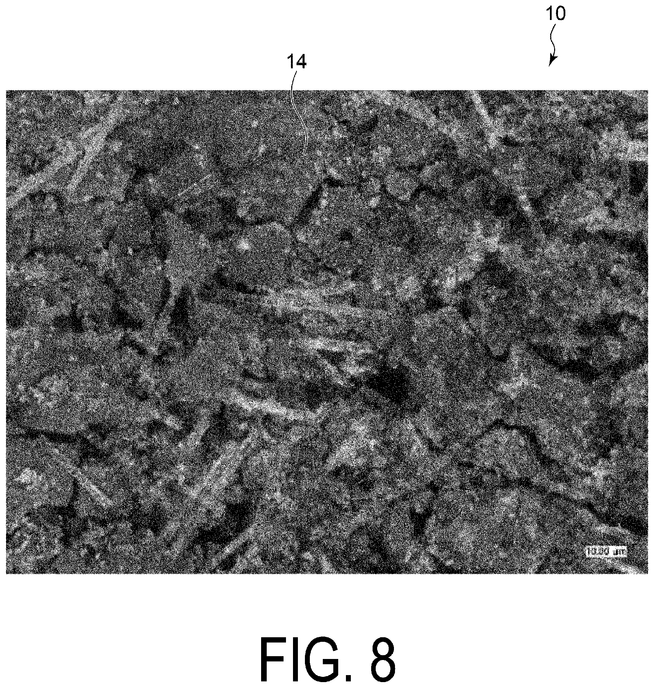

FIG. 8 is a view illustrating a filter 10, which is a filter produced by a method for producing a filter according to the comparative example. In the filter 10, a catalyst slurry in which ethanol is added to a catalyst slurry (solvent is water) prepared to have a concentration of the catalyst of 25 wt.% so that the additive concentration becomes 20 wt.% is sprayed onto a filter cloth made of 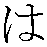 the first material.

The contact angle of this catalyst slurry is about 85°.

As illustrated in FIG. 8, in the filter 10 onto which the ethanol-added catalyst slurry is sprayed, the catalyst aggregates on the surface of the filter cloth (the aggregated catalyst is indicated by reference sign 14).

When the catalyst aggregates on the surface of the filter cloth in this manner, the pressure difference (pressure loss) between an upstream side and a downstream side of the filter 10 is large, and the catalyst easily falls off from the filter cloth.

### Example

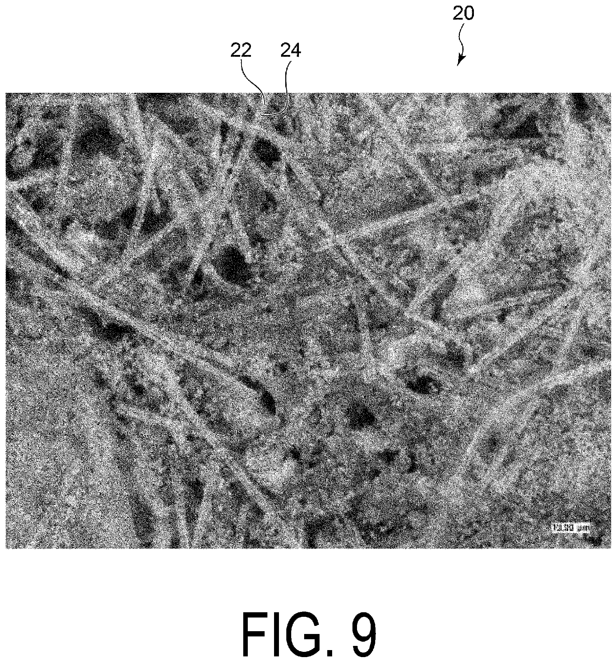

FIG. 9 is a view illustrating a filter 20, which is a filter produced by a method for producing a filter according to the example. In the filter 20, a catalyst slurry in which polyoxyethylene alkyl ether (surfactant) is added to a catalyst slurry (solvent is water) prepared to have a catalyst concentration of 25 wt.% so that the additive concentration becomes 1.0 wt.% is sprayed onto a filter cloth made of the first material.

The contact angle of this catalyst slurry is about 41°.

As illustrated in FIG. 9, in the filter 20 onto which the surfactant-added catalyst slurry is sprayed, the catalyst 24 is supported on a filter cloth fiber 22 in a highly dispersed state on the filter cloth fiber 22 without the catalyst aggregating on the surface of the filter cloth.

When the catalyst 24 is supported on the filter cloth fiber 22 in a highly dispersed state in this manner, not only the catalyst supported amount can be ensured, but also the pressure difference (pressure loss) between the upstream side and the downstream side of the filter 20 is small, and the catalyst is less likely to fall off from the filter cloth.

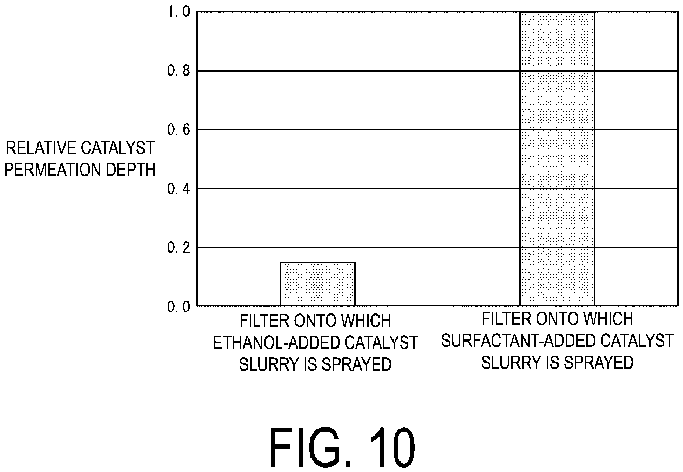

FIG. 10 is a graph showing a catalyst permeation depth (relative catalyst permeation depth) of a surfactant-added catalyst slurry with respect to a catalyst permeation depth of an ethanol-added catalyst slurry.

In FIG. 10, the catalyst permeation depth of the surfactant-added catalyst slurry is 1.0.

As shown in FIG. 10, the filter onto which the surfactant-added catalyst slurry is sprayed (hereinafter, called "filter according to the example") has a larger relative catalyst permeation depth than the filter onto which the ethanol-added catalyst slurry is sprayed (hereinafter, called "filter according to the comparative example"), and the catalyst permeates the filter cloth.

Due to this, in the filter according to the example, the adhesion between catalyst particles and the filter cloth fiber 22 is increased as compared with the filter according to the comparative example, and the catalyst is less likely to fall off from the filter cloth.

In the filter according to the example, the catalyst is dispersed throughout the filter cloth as compared with the filter according to the comparative example, and the catalyst is less likely to aggregate on the surface of the filter cloth.

Due to this, in the filter according to the example, the pressure difference (pressure loss) between the upstream side and the downstream side of the filter is smaller than that in the filter according to the comparative example.

The concentration (additive concentration) of ethanol added to the catalyst slurry is 20 wt.%, and the concentration (additive concentration) of the surfactant added to the catalyst slurry is 1.0 wt.%.

These concentrations are the same as the concentration of ethanol added to the catalyst slurry in the filter (comparative example) illustrated in FIG. 8 and the concentration of the surfactant added to the catalyst slurry in the filter (example) illustrated in FIG. 9.

In the filter according to the example, since the catalyst is dispersed throughout the filter cloth as compared with the filter according to the comparative example, the contact area of the catalyst in contact with a gas is increased, and the catalyst performance is improved even with the same catalyst and the same supported amount.

This can reduce the amount of the catalyst to support, can further reduce the pressure difference (pressure loss) between the upstream side and the downstream side of the filter, and can also reduce the production cost of the filter.

### [Effects]

According to the method for producing a filter according to the second embodiment described above, even when the filter cloth contains a fluorine fiber such as PTFE and the filter cloth has water repellency, the catalyst can be supported on the filter cloth by adding a surfactant without adding an organic solvent.

Since the addition concentration of the surfactant to be added to the catalyst slurry is 1.0 wt.% or less as shown in FIG. 5, the production cost of the catalyst slurry can be reduced as compared with a case where an organic solvent is added to the catalyst slurry.

The cost for waste water and exhaust gas treatment equipment required in adding an organic solvent to the catalyst slurry is eliminated.

When the catalyst slurry in which the addition concentration of the surfactant to be added to the catalyst is equal to or greater than the concentration of the surfactant specified in relation to the contact angle is sprayed onto the filter cloth, the catalyst slurry permeates the inside of the filter cloth fiber, and therefore the catalyst is uniformly supported on the filter cloth fiber while being dispersed in the inside of the filter cloth fiber. Therefore, the adhesion between the catalyst particles and the filter cloth fiber is improved, and the catalyst is less likely to fall off from the filter cloth.

The pressure difference (pressure loss) between the upstream side and the downstream side of the filter is reduced, and the catalyst performance is improved even with the same catalyst and the same supported amount.

Since the pressure difference (pressure loss) between the upstream side and the downstream side of the filter is small, the suction power of a dust collection device incorporating this filter can be reduced.

Since the catalyst is less likely to fall off from the filter cloth, a decrease in catalyst performance (DeNOx performance, dioxin decomposition performance, and the like) can be suppressed.

This can extend the replacement period of the filter.

Since the catalyst is uniformly supported on the filter cloth fiber while being dispersed in the inside of the filter cloth fiber, the surface area of the catalyst in contact with the gas is increased, and the catalyst performance (DeNOx performance, dioxin decomposition performance, and the like) can be enhanced even with the same catalyst and the same supported amount.

This can reduce the amount of the catalyst to support, can further reduce the pressure difference (pressure loss) between the upstream side and the downstream side of the filter, and can also reduce the production cost of the filter.

Since the catalyst performance can be enhanced, the exhaust gas treatment device can be made compact.

### [Third Embodiment]

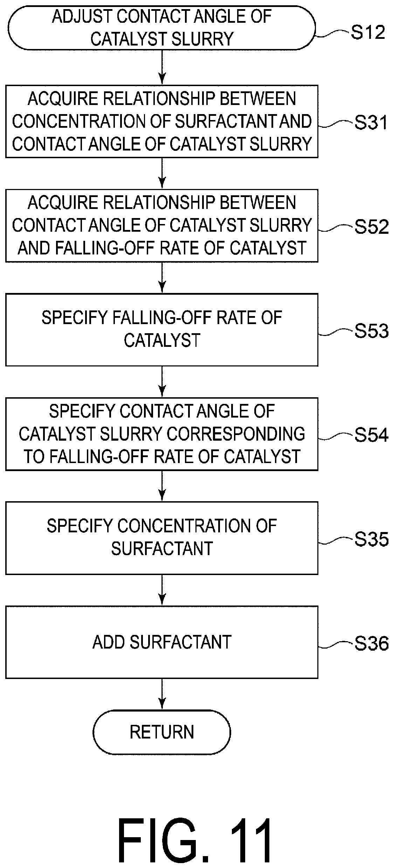

FIG. 11 is a flowchart schematically showing step (S12) of adjusting the contact angle of the catalyst slurry according to the third embodiment.

The method for producing a filter according to the third embodiment specifies step (S12) of adjusting the contact angle of the catalyst slurry with respect to the first embodiment, and step (S11) of preparing the catalyst slurry, step (S13) of applying the filter cloth with a catalyst slurry having the contact angle adjusted, and step (S14) of drying the filter cloth to which the catalyst slurry is applied are the same as those in the method for producing a filter according to the first embodiment.

As shown in FIG. 11, step (S12) of adjusting the contact angle of the catalyst slurry according to the third embodiment includes step (S31) of acquiring the relationship between the concentration of the surfactant and the contact angle of the catalyst slurry, step (S52) of acquiring the relationship between the contact angle of the catalyst slurry and a falling-off rate of the catalyst, step (S53) of specifying the falling-off rate of the catalyst, step (S54) of specifying the contact angle of the catalyst slurry corresponding to the falling-off rate of the catalyst, step (S35) of specifying the concentration of the surfactant, and step (S36) of adding the surfactant.

Step (S31) of acquiring the relationship between the concentration of the surfactant and the contact angle of the catalyst slurry, step (S35) of specifying the concentration of the surfactant, and step (S36) of adding the surfactant are the same as step (S31) of acquiring the relationship between the concentration of the surfactant and the contact angle of the catalyst slurry, step (S35) of specifying the concentration of the surfactant, and step (S36) of adding the surfactant in step (S12) of adjusting the contact angle of the catalyst slurry according to the second embodiment.

The falling-off rate of the catalyst is obtained by dividing the amount of the catalyst falling by applying forced vibration to a filter cloth (filter) supporting the catalyst by an initial mass.

The larger the contact angle of the catalyst slurry is, the larger the falling-off rate of the catalyst tends to be, and the smaller the contact angle of the catalyst slurry is, the smaller the falling-off rate of the catalyst tends to be.

Step (S52) of acquiring the relationship between the contact angle of the catalyst slurry and the falling-off rate of the catalyst is a step of acquiring the relationship between the contact angle of the catalyst slurry with respect to the filter cloth and the falling-off rate of the catalyst supported on the filter cloth.

Here, for the purpose of relatively evaluating the adhesion between the catalyst particles and the filter cloth, the relationship between the catalyst falling off amount and the number of times of forced vibration is obtained by simply applying the filter with forced vibration.

An ultrasonic device is selected as a device for applying the filter with forced vibration.

The ultrasonic device is, for example, a desktop type, and has an oscillation output of 75 W and a frequency of 28 kHz.

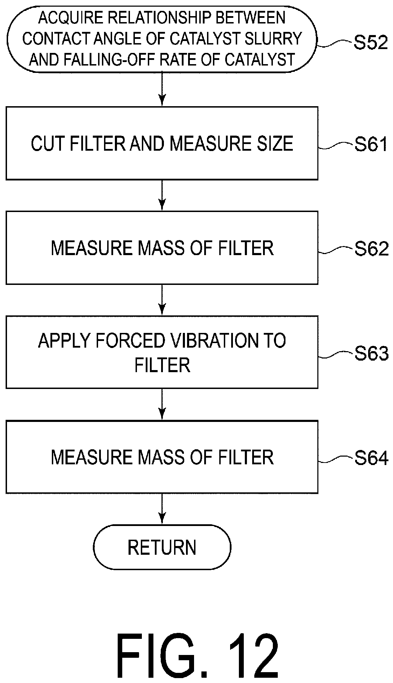

As shown in FIG. 12, step (S52) of acquiring the relationship between the contact angle of the catalyst slurry and the falling-off rate of the catalyst includes step (S61) of cutting a filter cloth (filter) on which the catalyst is supported and measuring the size, step (S62) of measuring the mass of the filter, step (S63) of applying the filter with forced vibration, and step (S64) of measuring the mass of the filter.

In step (S61) of cutting the filter and measuring the size, for example, the filter is cut into a circular shape.

In step (S63) of applying the filter with forced vibration, the forced vibration is applied to a sample holder with a spray side (surface) of the catalyst slurry facing upward, and the forced vibration is applied to the sample holder with the spray side (surface) of the catalyst slurry facing downward.

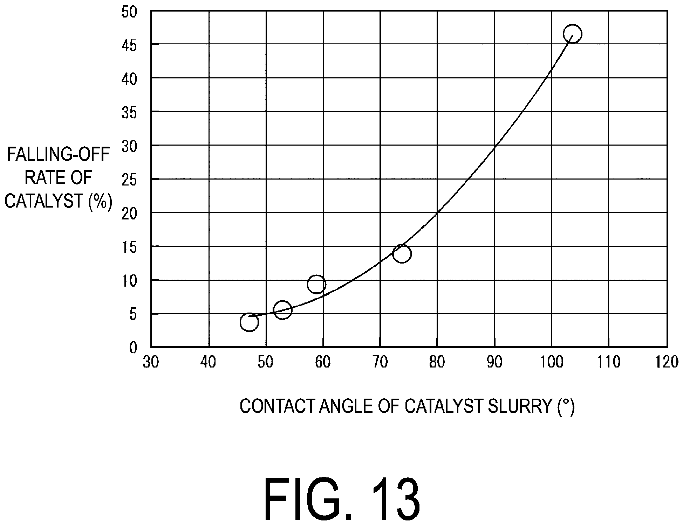

FIG. 13 shows the relationship between the contact angle and the falling-off rate of the catalyst acquired by the step (steps S61 to S64) of acquiring the relationship between the contact angle of the catalyst slurry and the falling-off rate of the catalyst.

For example, when the contact angle is 50°, the falling-off rate is 5%.

Step (S53) of specifying the falling-off rate of the catalyst shown in FIG. 11 is a step of specifying the falling-off rate of the catalyst supported on the filter cloth, and is specified based on the required performance of the filter.

The required performance of the filter includes, for example, a replacement period of the filter, a backwashing frequency, a backwashing pressure, and catalyst performance.

Step (S54) of specifying the contact angle of the catalyst slurry corresponding to the falling-off rate of the catalyst is a step of specifying, based on the relationship with the falling-off rate of the catalyst, the contact angle of the catalyst slurry corresponding to the falling-off rate of the catalyst specified.

For example, when the falling-off rate of the catalyst is 5%, the contact angle is specified as 50° from the relationship between the contact angle of the catalyst slurry and the falling-off rate of the catalyst shown in FIG. 13.

When the falling-off rate of the catalyst is specified in this manner, the contact angle of the catalyst slurry is specified.

When the contact angle of the catalyst slurry is specified, the contact angle of the catalyst slurry is adjusted through the same operations as in the second embodiment, that is, step (S35) of specifying the concentration of the surfactant and step (S36) of adding the surfactant.

According to the method for producing a filter according to the third embodiment described above, since a filter having a small falling-off rate of the catalyst is produced, the replacement period of the filter can be extended.

This can reduce the cost.

When this filter is employed in a device that can backwash the filter, the backwashing pressure can be increased, and thus the dust can be more easily shaken off.

In the method for producing a filter according to the second embodiment and the method for producing a filter according to the third embodiment described above, step (S12) of adjusting the contact angle of the catalyst slurry has been described as being different, but the contact angle of the catalyst slurry may be adjusted by specifying the concentration of the surfactant based on the supported amount and the falling-off rate of the catalyst and adding the surfactant having the specified concentration to the catalyst slurry.

### [Example 1 of Plant with Filter Applied]

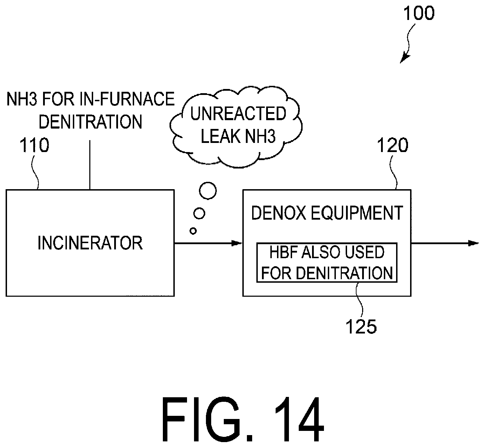

A filter 125 produced by the method for producing a filter according to any one of the first to third embodiments is applied to a plant 100 in which an in-furnace DeNOx equipment 120 as illustrated in FIG. 14 is installed.

The filter 125 installed in the in-furnace DeNOx equipment 120 is a catalyst bag filter also used for DeNOx, and includes an incinerator 110. While ammonia (NH₃) for in-furnace DeNOx is injected into the incinerator 110, DeNOx is performed by the catalyst bag filter also used for DeNOx, and leak ammonia (L-NH₃) is removed.

According to such the plant 100, since the catalyst is supported inside the filter cloth in a dispersed state, the contact area with incineration ash is reduced, and the durability of the filter can be improved (contact with a catalyst poisoning component contained in the incineration ash can be avoided).

It is possible to suppress the ash from fusing due to moisture or the like when the plant is started or stopped and to suppress the fusing ash and the catalyst from falling off, and it is also possible to avoid contact with a deliquescent substance.

When a reducing agent cannot be sprayed into the furnace due to low load operation or the like of the plant 100, DeNOx can be performed by spraying the reducing agent upstream of the filter.

The nitrogen oxide (NOx) concentration in combination with in-furnace DeNOx can be reduced, eliminating a DeNOx reaction tower.

### [Example 2 of Plant with Filter Applied]

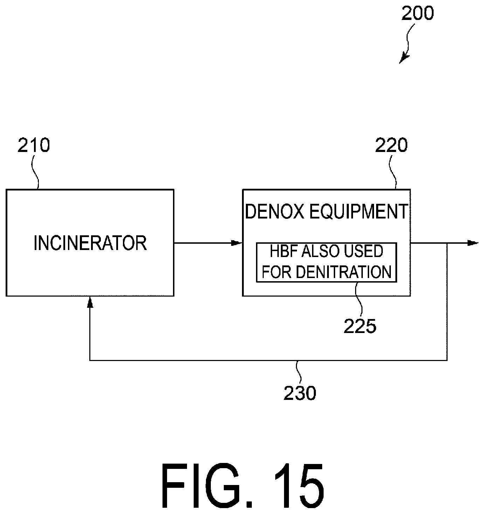

A filter 225 produced by the method for producing a filter according to any one of the first to third embodiments is applied to a plant 200 in which an in-furnace DeNOx equipment 220 and an exhaust gas recirculation device 230 as illustrated in FIG. 15 are installed.

The filter 225 installed in the in-furnace DeNOx equipment 220 is a catalyst bag filter also used for DeNOx, and includes an incinerator 210. While ammonia for in-furnace DeNOx is injected into the incinerator, the exhaust gas denitrated by the catalyst bag filter also used for DeNOx circulates through the exhaust gas recirculation device 230.

According to such a plant, since the pressure difference (pressure loss) between the upstream side and the downstream side of the filter is smaller than that in a known art, it is possible to increase the gas amount of exhaust gas to be recirculated by the exhaust gas recirculation device 230.

This can reduce nitrogen oxides (NOx).

It is also possible to blow a reducing agent into a circulation path of the exhaust gas, and the DeNOx efficiency in the furnace can be improved by promoting diffusion and mixing in the furnace.

A reducing agent such as ammonia water or urea water that needs to be evaporated or gasified can be applied.

The content described in the above embodiments can be understood as follows, for example.

A method for producing a filter according to an aspect of [1] is
a method for producing a filter in which a catalyst is supported on a filter cloth, the method including:
step (S11) of preparing a catalyst slurry;
step (S 12) of adjusting a contact angle of the catalyst slurry with respect to the filter cloth by adding a surfactant to the catalyst slurry; and
step (S13) of applying, to the filter cloth, a catalyst slurry having the contact angle adjusted

Such a production method improves the wettability of a catalyst slurry with respect to a filter cloth by adjusting the catalyst slurry such that the contact angle of the catalyst slurry with respect to the filter cloth is small.

Therefore, when the catalyst slurry before the adjustment of the contact angle and the catalyst slurry after the adjustment are compared at the same volume, the catalyst slurry after the adjustment has a larger contact area with the filter cloth fiber.

Due to this, in the catalyst slurry after adjusted to have a small contact angle, the catalyst slurry comes into uniform contact with the filter cloth fiber, the catalyst slurry permeates inside the filter cloth, and the catalyst is supported in a state of being dispersed in the filter cloth fiber.

[2] A method for producing a filter according to another aspect is the method for producing a filter according to [1],
wherein the step (S12) of adjusting a contact angle of the catalyst slurry includes
step (S31) of acquiring a relationship between a concentration of a surfactant contained in the catalyst slurry and the contact angle,
step (S32) of acquiring a relationship between the contact angle and a supported amount of a catalyst supported on the filter cloth,
step (S33) of specifying the supported amount of the catalyst supported on the filter cloth,
step (S34) of specifying, based on a relationship with the supported amount of the catalyst, a contact angle corresponding to the supported amount of the catalyst specified,
step (S35) of specifying, based on a relationship with the contact angle, a concentration corresponding to the contact angle specified, and
step (S36) of adding the surfactant to the catalyst slurry to have the concentration specified

Such a production method can support, by adding the surfactant to the catalyst slurry to have a specified concentration, the catalyst of the specified supported amount on the filter cloth.

[3] A method for producing a filter according to another aspect is the method for producing a filter according to [1],
wherein the step (S12) of adjusting a contact angle of the catalyst slurry includes
step (S51) of acquiring a relationship between a concentration of the surfactant contained in the catalyst slurry and the contact angle,
step (S52) of acquiring a relationship between the contact angle and a falling-off rate of a catalyst supported on the filter cloth,
step (S53) of specifying the falling-off rate of the catalyst supported on the filter cloth,
step (S54) of specifying, based on a relationship with the falling-off rate of the catalyst, a contact angle corresponding to the falling-off rate of the catalyst specified,
step (S55) of specifying, based on a relationship with the contact angle, a concentration corresponding to the contact angle specified, and
step (S56) of adding the surfactant to the catalyst slurry to have the concentration specified.

Such a production method, by adding the surfactant to the catalyst slurry to have a specified concentration, the catalyst of the specified falling-off rate can be supported on the filter cloth.

[4] A method for producing a filter according to another aspect is the method for producing a filter according to any one of [1] to [3],
wherein the surfactant is an ether type surfactant.

Since the ether type surfactant has a larger contact angle reduction effect in a low concentration range than the anionic surfactant, the amount of the surfactant added to the catalyst slurry can be reduced by using the ether type surfactant as the surfactant.

[5] A method for producing a filter according to another aspect is the method for producing a filter according to [4],
wherein the ether type surfactant is polyoxyethylene alkyl ether or polyalkylene alkyl ether.

[6] A method for producing a filter according to another aspect is the method for producing a filter according to any one of [1] to [5],
wherein the filter cloth includes a fluorine fiber.

Such a production method allows a catalyst slurry to easily permeate a filter cloth containing a fluorine fiber.

By permeating the catalyst into the filter cloth containing a fluorine fiber, the catalyst can be supported in a state where the catalyst is dispersed in the filter cloth containing a fluorine fiber.

[7] A method for producing a filter according to another aspect is the method for producing a filter according to any one of [1] to [6],
wherein in the step (13) of applying a catalyst slurry to the filter cloth, the catalyst slurry is sprayed onto the filter cloth by a spray nozzle.

Such a production method allows the catalyst slurry to be sprayed onto the filter cloth by the spray nozzle, allowing the catalyst slurry to be uniformly applied to the filter cloth.

[8] A method for producing a filter according to another aspect is the method for producing a filter according to any one of [1] to [7],
wherein the filter in which the catalyst is supported on the filter cloth is the filter (125) applied to the plant (100) in which the in-furnace DeNOx equipment (120) is installed.

Such a production method can reduce nitrogen oxides (NOx) can be performed.

[9] A method for producing a filter according to another aspect is the method for producing a filter according to any one of [1] to [7],
wherein the filter in which the catalyst is supported on the filter cloth is the filter (225) applied to the plant (200) in which the exhaust gas recirculation device (230) is installed.

Such a production method can reduce nitrogen oxides (NOx).

### Reference Signs List

1 Filter cloth
3 Catalyst slurry (droplet)
10 Filter onto which ether-added catalyst slurry is sprayed
14 Aggregated catalyst
20 Filter onto which surfactant-added catalyst slurry is sprayed
22 Filter cloth fiber
24 Catalyst
100, 200 Plant
110, 210 Incinerator
120, 220 In-furnace DeNOx equipment
125, 225 Filter (Catalyst bag filter also used for DeNOx)
230 Recirculation device

## Claims

1. A method for producing a filter in which a catalyst is supported on a filter cloth, the method comprising:
a step of preparing a catalyst slurry;
a step of adjusting a contact angle of the catalyst slurry with respect to the filter cloth by adding a surfactant to the catalyst slurry; and
a step of applying. to the filter cloth, a catalyst slurry having the contact angle adjusted.

2. The method for producing a filter according to claim 1,
wherein the step of adjusting a contact angle of the catalyst slurry includes
a step of acquiring a relationship between a concentration of a surfactant contained in the catalyst slurry and the contact angle,
a step of acquiring a relationship between the contact angle and a supported amount of a catalyst supported on the filter cloth,
a step of specifying the supported amount of the catalyst supported on the filter cloth,
a step of specifying, based on a relationship with the supported amount of the catalyst, a contact angle corresponding to the supported amount of the catalyst specified,
a step of specifying, based on a relationship with the contact angle, a concentration corresponding to the contact angle specified, and
a step of adding the surfactant to the catalyst slurry to have the concentration specified.

3. The method for producing a filter according to claim 1,
wherein the step of adjusting a contact angle of the catalyst slurry includes
a step of acquiring a relationship between a concentration of the surfactant contained in the catalyst slurry and the contact angle,
a step of acquiring a relationship between the contact angle and a falling-off rate of a catalyst supported on the filter cloth,
a step of specifying the falling-off rate of the catalyst supported on the filter cloth,
a step of specifying, based on a relationship with the falling-off rate of the catalyst, a contact angle corresponding to the falling-off rate of the catalyst specified,
a step of specifying, based on a relationship with the contact angle, a concentration corresponding to the contact angle specified, and
a step of adding the surfactant to the catalyst slurry to have the concentration specified.

4. The method for producing a filter according to any one of claims 1 to 3, wherein the surfactant is an ether type surfactant.

5. The method for producing a filter according to claim 4, wherein the ether type surfactant is polyoxyethylene alkyl ether or polyalkylene alkyl ether.

6. The method for producing a filter according to any one of claims 1 to 3, wherein the filter cloth includes a fluorine fiber.

7. The method for producing a filter according to any one of claims 1 to 3, wherein in the step of applying a catalyst slurry to the filter cloth, the catalyst slurry is sprayed onto the filter cloth by a spray nozzle.

8. The method for producing a filter according to any one of claims 1 to 3, wherein a filter in which a catalyst is supported on the filter cloth is a filter applied to a plant in which an in-furnace DeNOx equipment is installed.

9. The method for producing a filter according to any one of claims 1 to 3, wherein a filter in which a catalyst is supported on the filter cloth is a filter applied to a plant in which an exhaust gas recirculation device is installed.
